# EUROPEAN PATENT APPLICATION

(11) **EP 4 506 193 A1**
(43) Date of publication of application: **12.02.2025**
(21) Application number: 24190922.5
(22) Date of filing: 25.07.2024
(51) Int. Cl.: B60H 1/00, B60H 1/32, H01M 10/6556, F25B 41/42

(54) **THERMAL MANAGEMENT MODULE**

(30) Priority: 11.08.2023 CN 202311013170
(71) Applicant: Zhejiang Sanhua Intelligent Controls Co., Ltd., Shaoxing City, Zhejiang 312500 (CN)
(72) Inventor: TAN, Yongxiang, Shaoxing City, 312500 (CN)
(74) Representative: Michalski Hüttermann & Partner Patentanwälte mbB

(57) **Abstract**

A thermal management module includes a thermal management component, a support component and a connecting component. The support component includes a first surface and a second surface. The thermal management component is located at least partially on a side of the first surface. The connecting component is located at least partially on a side of the second surface. The thermal management component is connected to the side of the first surface. The connecting component is connected to the side of the second surface. The support component has a transfer hole communicating with the thermal management component and the connecting component. The connecting component has a channel communicating with the transfer hole. The thermal management component includes at least two sub-components. The thermal management module has a flow channel communicating with at least two sub-components. The transfer hole and the channel are at least part of the flow channel.

## Description

### CROSS-REFERENCE TO RELATED APPLICATION

This patent application claims priority of a Chinese Patent Application No. 202311013170.9, filed on August 11, 2023 and titled "THERMAL MANAGEMENT MODULE", the entire content of which is incorporated herein by reference.

### FIELD

The present invention relates to the field of thermal management, and in particular, to a thermal management module.

### BACKGROUND

A heat pump integrated module in the related art includes a flow channel plate and a thermal management component. Thermal management component includes sub-components such as a heat exchanger and an electric valve. The thermal management component is mounted to a surface of the flow channel plate. The flow plate defines a flow channel for communicating the heat exchanger with a valve component. The flow channel plate is composed of two plates, in which one plate defines a C-shaped flow channel in cross-section, and the other plate is attached to the aforementioned plate to form the flow channel.

Since the flow channel plate not only plays a role of supporting the thermal management component, but also plays a role of communicating with the thermal management component, the flow channel plate has a complicated structure and needs to be manufactured by die-casting or casting. As a result, the process is complicated, the cost is high, and the weight is heavy.

### SUMMARY

An object of the present invention is to provide a thermal management module with lower cost.

In a first aspect, an embodiment of the present invention provide a thermal management module, including: a thermal management component; a support component; and a connecting component; wherein the support component includes a first surface and a second surface which are disposes in a thickness direction thereof; the thermal management component is at least partially located on a side of the first surface; the connecting component is at least partially located on a side of the second surface; the thermal management component is connected to the side of the first surface, and the connecting component is connected to the side of the second surface;
the support component defines a transfer hole that communicates with the thermal management component and the connecting component; the connecting component defines a channel located inside the connecting component, and the channel is in communication with the transfer hole;
the thermal management component includes at least two sub-components, the thermal management module defines a flow channel communicating with the at least two sub-components, and the transfer hole and the channel are at least part of the flow channel.

Furthermore, the connecting component includes a channel wall which is disposed circumferentially around the channel; an axial direction of the transfer hole extends along the thickness direction of the support component.

Furthermore, the connecting component includes a first plate and a second plate, the first plate defines a first groove, the second plate defines a second groove, the first plate and the second plate are connected by welding, and the first groove and the second groove cooperate to form at least part of the channel.

Furthermore, the connecting component includes a first plate and a second plate, the first plate defines a first groove, the second plate is of a flat configuration, the first plate and the second plate are welded together; the first groove of the first plate and the second plate cooperate to form at least part of the channel.

Furthermore, the connecting component includes a connecting pipe, a conduit of the connecting pipe forms at least part of the channel.

Furthermore, the at least two sub-components include a first sub-component and a second sub-component; the first sub-component is a valve component, the first sub-component is configured to control a communication state of a fluid; the second sub-component is a heat exchanger, the second sub-component is configured to exchange heat between at least two fluids;
the support component and the connecting component cooperate to communicate with the first sub-component and the second sub-component;
all of the first sub-component and the second sub-component are located on a same one of the side of the first surface and the side of the second surface; or, the first sub-component is located on one of the side of the first surface and the side of the second surface, and the second sub-component is located on a remaining one of the side of the first surface and the side of the second surface.

Furthermore, the thermal management component includes a valve assembly, the valve assembly includes at least two valve components and a control portion, each valve component includes a motor portion and a valve core portion, the at least two valve components share the control portion, and the support component and the connecting component cooperate to be in communication with the at least two valve components.

Furthermore, the support component is an aluminum profile extruded part; the connecting component is an aluminum profile stamped part, or the connecting component is an aluminum pipe.

Furthermore, the thermal management component further includes at least one sub-component of a sensor, a gas-liquid separation device, a liquid reservoir and a compressor; and
the one sub-component is in communication with other sub-components through the connecting component, or the one sub-component is in communication with other sub-components through the connecting component and the support component.

Furthermore, the thermal management module includes a compressor and a gas-liquid separation device, the gas-liquid separation device includes a gas-liquid separator and an intermediate heat exchanger, the intermediate heat exchanger is disposed inside the gas-liquid separation device;
the support component is a bracket which is a profile extrusion molded part; the compressor is at least partially disposed inside the support component; the gas-liquid separation device is disposed on a periphery of the support component;
the connecting component includes a connecting pipe, the connecting pipe communicates with the gas-liquid separation device and the transfer hole of the support component, the connecting pipe communicates with the compressor and the transfer hole of the support component, and the compressor is in communication with the gas-liquid separation device.

In the embodiment of the present invention, the thermal management module includes the support component and the connecting component. The connecting component defines the channel located inside the connecting component. The channel is in communication with the transfer hole. The transfer hole and the channel are at least part of the flow channel. That is, the flow channel plate is divided into the support component mainly with a support function and the connection component mainly with a communication function, thereby achieving at least partial separation of the support function and the communication function. As a result, the support component and the connecting component can be manufactured with a relatively simple process, thereby reducing the cost.

In a second aspect, an embodiment of the present invention provide a thermal management module, including: a thermal management component, a support component and a connecting component; the support component including a first rib and a second rib, a hollow space being formed between the first rib and the second rib, the first rib defining a first transfer hole, the second rib defining a second transfer hole;
wherein the thermal management component includes a first sub-component and a second sub-component, the first transfer hole communicates with the first sub-component and the connecting component, the second transfer hole communicates with the second sub-component and the connecting component.

Furthermore, the connecting component includes a first connecting pipe and a second connecting pipe, each of the first connecting pipe and the second connecting pipe defines a channel, the first connecting pipe communicates with the first sub-component and the second sub-component, the second connecting pipe communicates with the first sub-component and other components, an air gap is formed between the first connecting pipe and the second connecting pipe.

Furthermore, the thermal management component includes a third sub-component, the second connecting pipe communicates with the first sub-component and the third sub-component.

Furthermore, the first sub-component includes at least one of a valve component and a sensor, the second sub-component includes at least one of a heat exchanger and a valve component, the third sub-component is at least one of a liquid reservoir, a gas-liquid separator, a gas-liquid separation device and a compressor.

Furthermore, the thermal management module includes a compressor and a gas-liquid separation device, the gas-liquid separation device includes a gas-liquid separator and an intermediate heat exchanger, the intermediate heat exchanger is disposed inside the gas-liquid separator, the compressor is at least partially disposed inside the support component, the gas-liquid separation device is at least partially disposed outside the support component;
the support component defines a plurality of hollow spaces spaced apart from one another; a cross-sectional area of the hollow spaces is larger than a cross-sectional area of the first transfer hole and the second transfer hole.

In the embodiment of the present invention, the thermal management module includes the support component and the connecting component. That is, the flow channel plate is divided into the support component mainly with a support function and the connection component mainly with a communication function, thereby achieving at least partial separation of the support function and the communication function. As a result, the support component and the connecting component can be manufactured with a relatively simple process, thereby reducing the cost. The support component includes the first rib and the second rib. A hollow space is formed between the first rib and the second rib. The hollow space is conducive to lightweight design.

In a third aspect, an embodiment of the present invention provide a thermal management module, including: a thermal management component, a support component and a connecting component; the support component supporting the thermal management component; wherein the thermal management component includes a first sub-component and a second sub-component, the thermal management module includes a connection portion connecting the first sub-component and the connecting component, the connection portion communicates with the first sub-component and the connecting component, the first sub-component and the second sub-component are in communication at least through the connection portion and the connecting component;
the connection portion extends from one side to another side along a thickness direction of the support component; the connection portion is part of the first sub-component, or the connection portion is part of the connecting component.

Furthermore, the first sub-component is a valve component, the first sub-component is configured to control a communication state of a fluid, the connection portion belongs to a valve body portion of the first sub-component, the connection portion extends through the support component along the thickness direction of the support component; or,
the connection portion belongs to the connecting component, the connection portion is a connection pipe that extends through the support component along the thickness direction of the support component.

Furthermore, the thermal management module further includes a connection portion connected between the second sub-component and the connecting component, wherein the connection portion communicates with the second sub-component and the connecting component;
the second sub-component is a heat exchanger, the second sub-component is configured to exchange heat between fluids;
the connection portion is part of the second sub-component, and the connection portion extends through the support component along the thickness direction of the support component, or, the connection portion belongs to the connecting component, and the connection portion is a connection pipe that extends through the support component along the thickness direction of the support component.

Furthermore, the support component defines a plurality of transfer holes being communicated with the thermal management component and the connecting component, an axial direction of the transfer hole extends along the thickness direction of the support component, and the support component is an aluminum profile extruded part;
the connecting component includes a connecting pipe with a conduit being in communication with the transfer hole.

Furthermore, the thermal management component includes an electronic expansion valve for refrigerant flow and a plate heat exchanger for circulating refrigerant and coolant, the plate heat exchanger includes a refrigerant passageway and a coolant passageway for exchanging heat therebetween, and the refrigerant passageway of the plate heat exchanger is in communication with the electronic expansion valve;
wherein the electronic expansion valve and the plate heat exchanger are retained to a same side of the support component which is opposite to a side of the connecting component.

In the embodiment of the present invention, the thermal management module includes the support component and the connecting component. That is, the flow channel plate is divided into the support component mainly with a support function and the connection component mainly with a communication function, thereby achieving at least partial separation of the support function and the communication function. As a result, the support component and the connecting component can be manufactured with a relatively simple process, thereby reducing the cost. The connection component is part of the first sub-component, or the connection component is part of the connecting component, which can reduce the number of support components used as connections between the first sub-component and the connecting component, thereby reducing the risk of fluid leakage in the thermal management module.

### BRIEF DESCRIPTION OF DRAWINGS

FIG. 1 is a schematic view of a thermal management module in accordance with a first embodiment of the present invention;
FIG. 2 is a schematic view of the thermal management module in accordance with a second embodiment of the present invention;
FIG. 3 is a schematic view of the thermal management module in accordance with a third embodiment of the present invention;
FIG. 4 is a schematic view of the thermal management module in accordance with a fourth embodiment of the present invention;
FIG. 5 is a schematic view of the thermal management module in accordance with a fifth embodiment of the present invention;
FIG. 6 is a cross-sectional schematic view of a connecting component in accordance with a first embodiment of the present invention;
FIG. 7 is a cross-sectional schematic view of the connecting component in accordance with a second embodiment of the present invention;
FIG. 8 is a cross-sectional schematic view of the connecting component in accordance with a third embodiment of the present invention;
FIG. 9 is a perspective view the connecting component in accordance with the third embodiment of the present invention;
FIG. 10 is an exploded schematic view of the connecting component in accordance with the third embodiment of the present invention;
FIG. 11 is a cross-sectional schematic view of the connecting component in accordance with a fourth embodiment of the present invention;
FIG. 12 is a perspective view of the connecting component in accordance with a fifth embodiment of the present invention;
FIG. 13 is an exploded schematic view of the connecting component in accordance with a sixth embodiment of the present invention;
FIG. 14 is an exploded schematic view of the connecting component in accordance with the sixth embodiment of the present invention from another angle;
FIG. 15 is a perspective schematic view of the thermal management module in accordance with an embodiment of the present invention;
FIG. 16 is a schematic perspective view of the thermal management module in accordance with the embodiment of the present invention from another angle;
FIG. 17 is an exploded schematic view of the thermal management module in accordance with an embodiment of the present invention;
FIG. 18 is an exploded schematic view of the thermal management module in accordance with the embodiment of the present invention from another angle;
FIG. 19 is an exploded schematic view of a valve assembly in accordance with an embodiment of the present invention;
FIG. 20 is a perspective schematic view of a support component and the connecting component in accordance with the embodiment of the present invention;
FIG. 21 is an exploded schematic view of the support component and the connecting component in accordance with the embodiment of the present invention;
FIG. 22 is an exploded schematic view of the support component and the connecting component in accordance with the embodiment of the present invention from another angle;
FIG. 23 is a perspective schematic view of the support component and the connecting component in accordance with the embodiment of the present invention;
FIG. 24 is a schematic cross-sectional view of the support component in accordance with the embodiment of the present invention; and
FIG. 25 is a schematic diagram of the thermal management system of the present invention.

### DETAILED DESCRIPTION

The embodiment of the present invention adopts a support component and a flow component to replace a die-cast flow channel plate. The support component plays a supporting role and a fluid transfer role. The flow component realizes fluid communication and thermal insulation. Compared with the die-cast flow channel plate, since the support component and the flow component assume the support function and the circulation function of the flow channel plate, and their respective structures are simpler, and processes such as profile extrusion molding, stamping molding, and drilling can be used to reduce costs Furthermore, it can reduce weight compared to the heavy die-cast flow channel plate.

Exemplary embodiments of the present invention will be described in detail below with reference to the accompanying drawings. Features in the following embodiments and implementations may complement each other or be combined with each other unless they conflict with each other.

The exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present invention. Rather, they are merely examples of apparatus and methods consistent with aspects of the present invention as detailed in the appended claims.

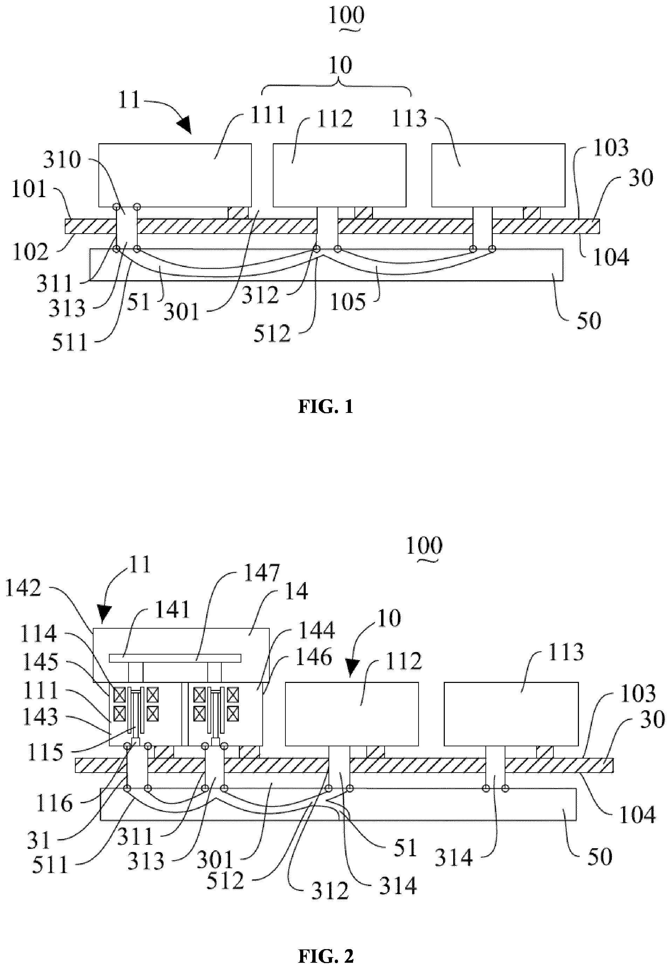

As shown in FIG. 1, a thermal management module 100 in accordance with the present invention includes a thermal management component 10, a support component 30 and a connecting component 50. The support component 30 includes a first surface 101 and a second surface 102 which are disposed in a thickness direction thereof. The thermal management component 10 is located at least partially on a side of the first surface 101. The connecting component 50 is located at least partially on a side of the second surface 102. The thermal management component 10 is connected to side of the first surface 101. The connecting component 50 is connected to the side of the second surface 102.

The support component 30 defines a transfer hole 310. The transfer hole 310 communicates with the thermal management component 10 and the connecting component 50. The connecting component 50 defines a channel 51 inside it. The channel 51 is in communication with the transfer hole 310. Thermal management component 10 includes at least two sub-components 11. The thermal management module 100 defines a flow channel 105 communicating with the at least two sub-components 11. The transfer hole 310 and the channel 51 are at least part of the flow channel 105. An axial direction of the transfer hole 310 extends along the thickness direction of the support component 30. A first sub-component 111 is located on one of the side of the first surface 101 and the side of the second surface 102, and a second sub-component 112 is located on a remaining one of the side of the first surface 101 and the side of the second surface 102. Alternatively, both the first sub-component 111 and the second sub-component 112 are located on one of the side of the first surface 101 and the side of the second surface 102. That is, the first sub-component 111 and the second sub-component 112 may be located on the same side in the thickness direction of the support component 30, or may be located on different sides in the thickness direction of the support component 30.

In the embodiment of the present invention, the thermal management module 100 includes the support component 30 and the connecting component 50. The connecting component 50 defines the channel 51 inside it. The channel 51 is in communication with the transfer hole 310. The transfer hole 310 and the channel 51 are at least part of the flow channel 105. That is, the die-cast flow channel plate is divided into the support component 30 with a main support function and the connecting component 50 with a main communication function, thereby achieving at least partial separation of the support function and the communication function. Therefore, both the support component 30 and the connecting component 50 can be manufactured with a relatively simple process to reduce costs. Furthermore, compared with the heavy flow channel plate formed by die-casting, the weight of the thermal management module 100 disclosed in the present invention can also be reduced.

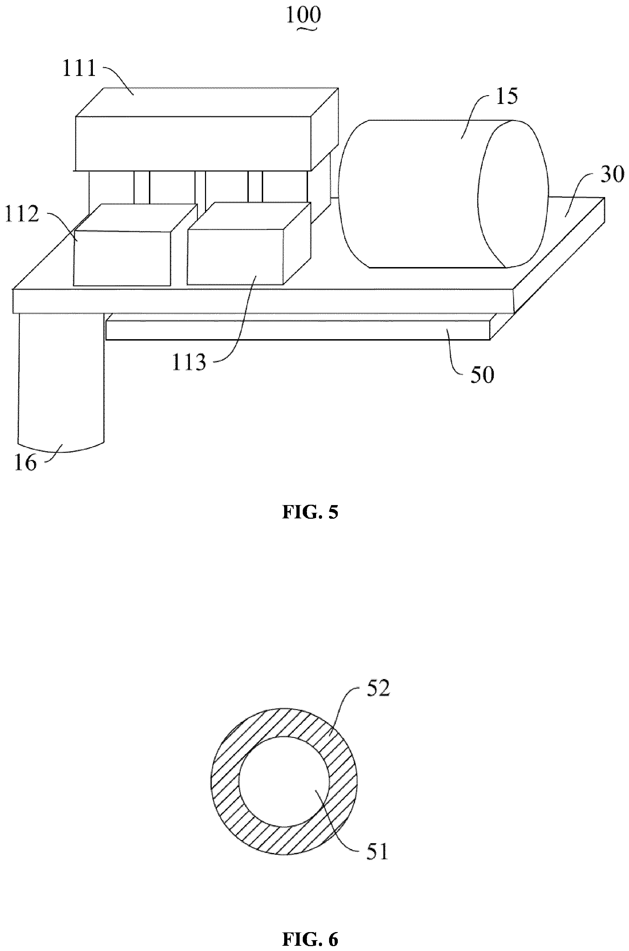

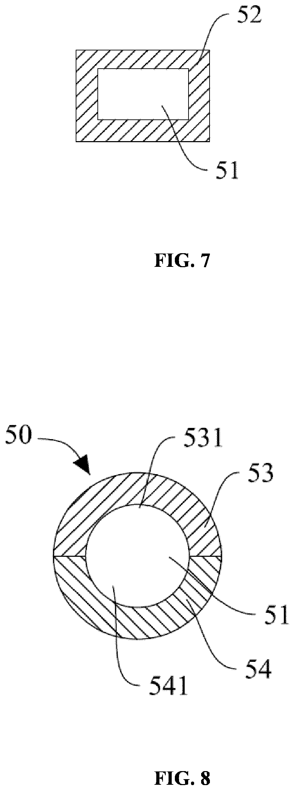

As shown in FIG. 6 and FIG. 7, the connecting component 50 includes a channel wall 52. The channel wall 52 is disposed circumferentially around the channel 51. A cross-section of the channel 51 may be circular, rectangular or other shapes.

The channel 51 of the connecting component 50 is mainly responsible for the communication function. Therefore, the channel wall 52 of the connecting component 50 does not need to be very thick, resulting in a simple structure, low cost, and light weight. In some embodiments, both the support component 30 and the connecting component 50 are made of aluminum to adapt to lightweight design.

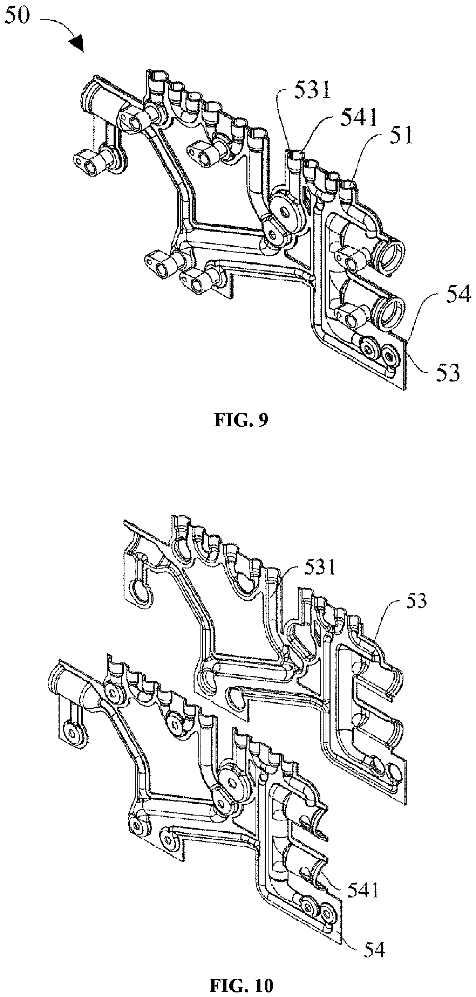

As shown in FIG. 8 to FIG. 10, in one embodiment of the connecting component 50, the connecting component 50 includes a first plate 53 and a second plate 54. The first plate 53 defines a first groove 531. The second plate 54 defines a second groove 541. The first plate 53 and the second plate 54 are welded together. The first groove 531 and the second groove 541 cooperate to form at least part of the channel 51. Since the connecting component 50 is mainly responsible for the communication function, and the supporting function lies in the support component 30, both the first plate 53 and the second plate 54 of the connecting component 50 can be formed by stamping, which not only makes the manufacturing process simpler, but also results in a lighter thickness and lighter weight.

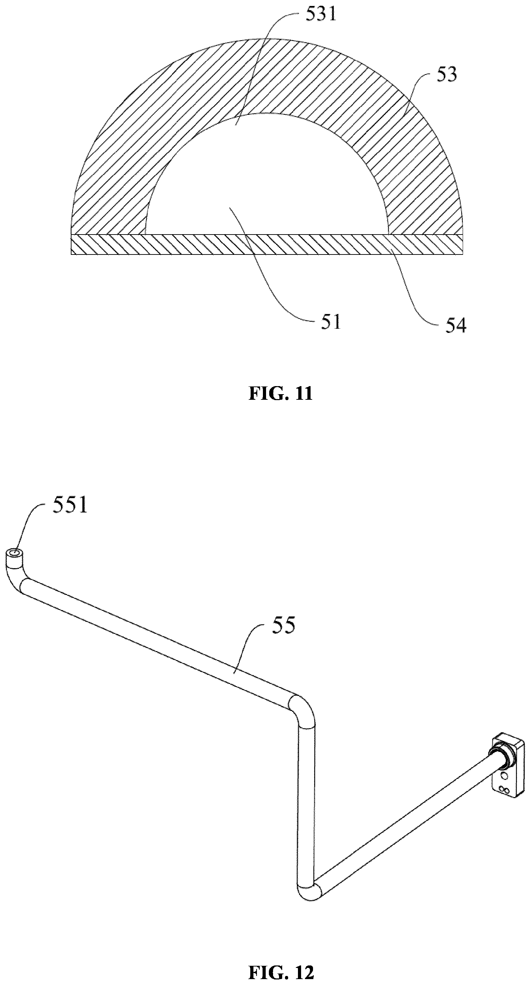

As shown in FIG. 11, in another embodiment of the connecting component 50, the connecting component 50 includes a first plate 53 and a second plate 54. The first plate 53 defines a first groove 531. The second plate 54 is of a flat configuration. The first plate 53 and the second plate 54 are welded together. The first groove 531 of the first plate 53 and the second plate 54 cooperate to form at least part of the channel 51. Since the connecting component 50 is mainly responsible for the communication function, the supporting function lies in the support component 30, the first plate 53 of the connecting component 50 can be formed by stamping, which not only makes the manufacturing process simpler, but also results in a lighter thickness and lighter weight. The second plate 54 can be formed by hot rolling, so that the manufacturing process is simple, the cost is low, and the weight is light.

As shown in FIG. 12, in yet another embodiment of the connecting component 50, the connecting component 50 includes a connecting pipe 55. A conduit 551 of the connecting pipe 55 forms at least part of the channel 51. The connecting pipe 55 can be formed by drilling, bending, extrusion and other processes. Compared with the die-cast flow channel plate, the process is simple, the cost is low, and the weight is lighter. In some embodiments, the connecting component 50 may also be a combination of a stamped plate and the connecting pipe 55.

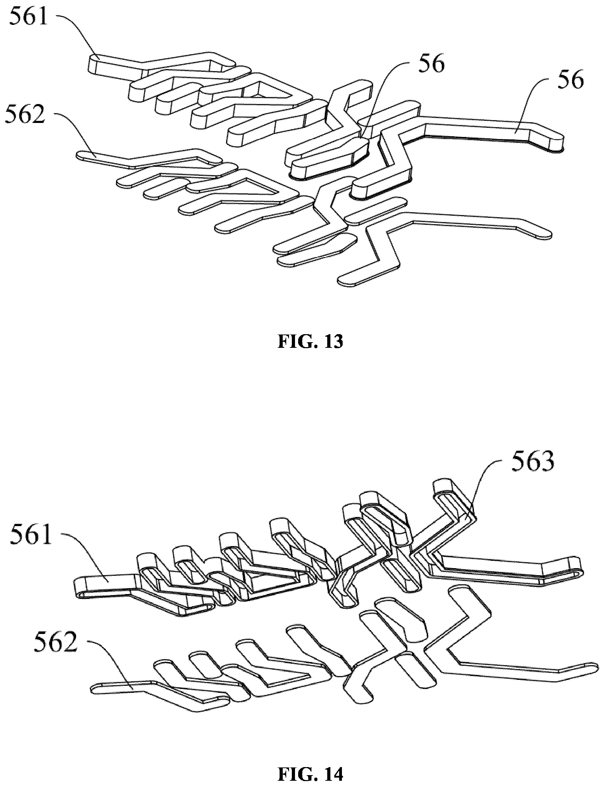

As shown in FIG. 13 and FIG. 14, in yet another embodiment of the connecting component 50, the connecting component 50 includes a plurality of mutually isolated plate blocks 56. Each plate block 56 includes a first plate 561 and a second plate 562. The first plate 561 defines a first groove 563. The second plate 562 has a flat plate shape, or the second plate 562 defines a second groove. The first plate 561 and the second plate 562 are spliced to form at least part of the channel 51. Since the multiple plate blocks 56 are isolated from one another, the thermal bridge effect among the plate blocks 56 can be reduced, thereby improving the thermal management performance of the thermal management module 100. Besides, the connecting component 50 may also be formed by stacking composite plates.

In some embodiments, the connecting component 50 may also be formed by a combination of one or more of the above implementations.

As shown in FIG. 1, the at least two sub-components 11 include a first sub-component 111 and a second sub-component 112. The first sub-component 111 may be a valve component such as a solenoid valve, a throttle valve, a three-way valve, etc. The second sub-component 112 may be a solenoid valve, a heat exchanger 112c, or other sub-components. When the first sub-component 111 is the valve component, the first sub-component 111 is configured to control a communication state of a fluid. When the second sub-component 112 is the heat exchanger, the second sub-component 112 is configured to exchange heat between at least two fluids. The support component 30 and the connecting component 50 cooperate to communicate with the first sub-component 111 and the second sub-component 112, so that the structures of the support component 30 and the connecting component 50 are relatively simple.

In other embodiments, as shown in FIG. 2, thermal management component 10 includes a valve assembly 14. The valve assembly 14 includes at least two valve components 111 and a control portion 141. Each valve component 111 includes a motor portion 114 and a valve core portion 115. The at least two valve components share the control portion 141. The support component 30 and the connecting component 50 cooperate to communicate with the at least two valve components 111. The valve assembly 14 integrates the control portion 141 of the two valve components 111, which reduces the connection wiring harnesses and connectors between the valve components 111 and a vehicle controller, thereby reducing costs. Besides, fewer wiring harnesses make installation and error-proofing easier. In addition, the cost of additional power modules and driver modules is reduced. The valve assembly 14 integrates the control portion 141 of the two valve components 111, which improves communication efficiency with the vehicle controller, facilitates software upgrades of all valve components, and minimizes the accumulation of inrush current.

The support component 30 is an aluminum profile extruded part. The connecting component 50 is an aluminum profile stamped or extruded part, or, the connecting component 50 is an aluminum pipe. Compared with the die-cast flow channel plate, the support component 30 formed by extrusion of aluminum profile, the connecting component 50 formed by stamping or extrusion of aluminum profile, or the connecting component 50 is the aluminum pipe, the manufacturing process of the embodiment of the present invention is simple, low in cost and light in weight. Compared with the flow channel plate composed of only two stamped aluminum plates, the support strength is improved due to the provision of the support component 30, and the hidden danger of insufficient strength of the two stamped aluminum plates used to support the thermal management component 10 is reduced.

The thermal management component 10 further includes a third sub-component 113 of at least one of a sensor, a gas-liquid separation device, a liquid reservoir, and a compressor. The third sub-component 113 communicates with other sub-components 11 through the connecting component 50, or the third sub-component 113 communicates with the other sub-components 11 through the connecting component 50 and the support component 30.

As shown in FIG. 5, the thermal management module 100 includes a compressor 15 and a liquid reservoir 16. The support component 30 is a bracket which is a profile extrusion molded part. The compressor 15 and the liquid reservoir 16 are located on different sides of the support component 30, so that the space on different sides of the thermal management module 100 can be fully utilized.

The connecting component 50 includes a connecting pipe 55. The connecting pipe 55 communicates with the liquid reservoir 16 and the transfer hole 310 of the support component 30. The connecting pipe 55 communicates with the compressor 15 and the transfer hole 310 of the support component 30. The compressor 15 and the liquid reservoir 16 are in communication.

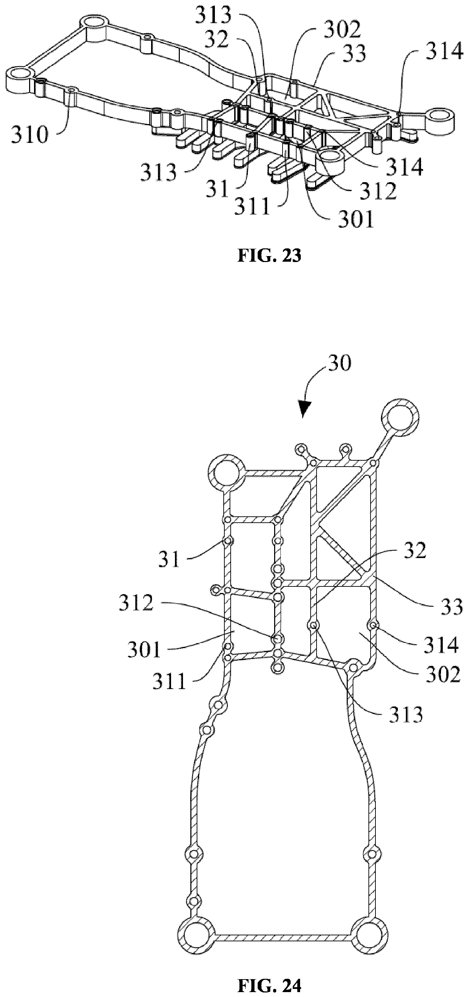

As shown in FIG. 2 and FIG. 24, a thermal management module 100 in accordance with another embodiment of the present invention includes a thermal management component 10, a support component 30 and a connecting component 50. The support component 30 includes a first side 103 and a second side 104 which are disposed in a thickness direction thereof. The thermal management component 10 is connected to the first side 103. The connecting component 50 is connected to the second side 104.

The support component 30 defines a transfer hole portion 31. The transfer hole portion 31 communicates with the thermal management component 10 and the connecting component 50. Thermal management component 10 includes at least two sub-components 11. The connecting component 50 communicates with the at least two sub-components 11. The transfer hole portion 31 includes a first hole portion 311 and a second hole portion 312. The support component 30 includes a hollow portion 301 disposed between the first hole portion 311 and the second hole portion 312.

In the embodiment of the present invention, the thermal management module 100 includes the support component 30 and the connecting component 50. That is, the forged flow channel plate is divided into the support component 30 with a main support function and the connecting component 50 with a main communication function, thereby achieving at least partial separation of the support function and the communication function. As a result, both the support component 30 and the connecting component 50 can be manufactured with a relatively simple process, thereby reducing the cost. The support component 30 includes the hollow portion 301 disposed between the first hole portion 311 and the second hole portion 312. The hollow portion 301 is beneficial to lightweight design.

The support component 30 includes a plurality of hollow portions 301 spaced apart from one another. A cross-sectional area of the hollow portions 301 is larger than a cross-sectional area of the transfer hole portion 31, thereby further reducing the weight of the support component 30.

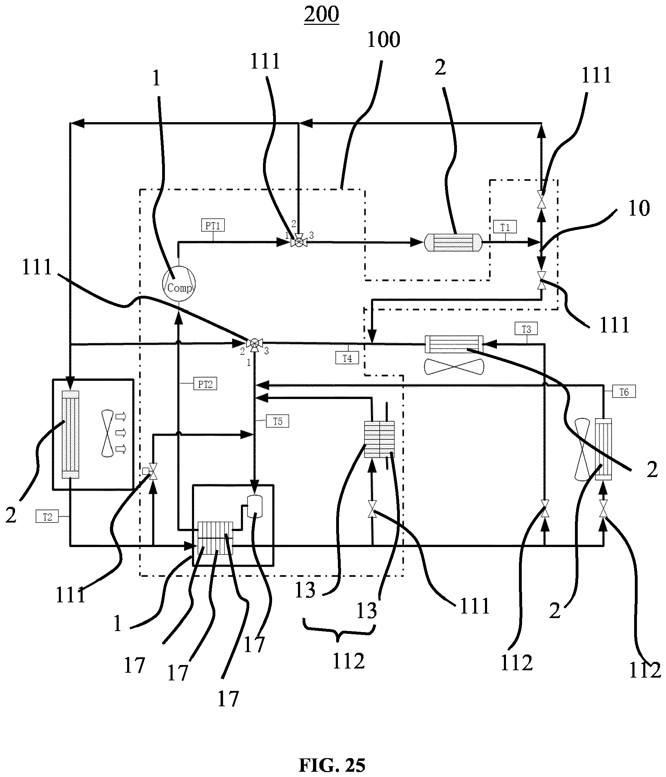

In some embodiments, as shown in FIG. 2 and FIG. 25, at least two sub-components 11 include a first sub-component 111 and a second sub-component 112. When the first sub-component 111 is a valve component 111a, 111b, 111c, 111d, 111e, 111f, the first sub-component 111 is used to control the communication state of the fluid. When the second sub-component 112 is a heat exchanger 112c, the heat exchanger 112c is used for heat exchange between at least two fluids. The heat exchanger 112c defines a first flow channel 131 and a second flow channel 132. The first flow channel 131 is used for circulating a refrigerant. The second flow channel 132 is used to communicate with a coolant. The valve component includes a motor portion 114, a valve core portion 115 and a valve flow path portion 116. The valve core portion 115 is used to control the communication state of the valve flow path portion 116. The transfer hole portion 31 includes a first hole portion 311 and a second hole portion 312. The connecting component 50 has a first channel portion 511 and a second channel portion 512. The first hole portion 311 communicates the valve flow path portion 116 with the first channel portion 511. The second hole portion 312 communicates the first flow channel 131 with the second channel portion 512. The first channel portion 511 and the second channel portion 512 are in communication.

In some embodiments, the at least two sub-components 11 include a valve assembly 14. The valve assembly 14 includes a first valve component 143, a second valve component 144 and a control board 147. Each valve component 143, 144 includes the motor portion 114 and the valve core portion 115. The at least two valve components 143, 144 share the control board 147. The support component 30 and the connecting component 50 cooperate to communicate with the at least two valve components 143, 144. The first valve component 143 is a three-way valve or a throttle valve. The second valve component 144 is a three-way valve or a throttle valve.

The valve assembly 14 includes a control box 142 in which the control board 147 is located. The first valve component 143 includes a first valve body portion 145. The second valve component 144 includes a second valve body portion 146. The first valve body portion 145 and the second valve body portion 146 are spaced apart from each other, or the first valve body portion 145 and the second valve body portion 146 are connected to each other. By spacing the first valve body portion 145 and the second valve body portion 146, thermal crosstalk between the two sub-components can be reduced. By connecting the first valve body portion 145 and the second valve body portion 146 to each other, the structure of the two valve components can be made simpler and the cost lower.

As shown in FIG. 5, the thermal management module 100 includes a compressor 15 and a liquid reservoir 16. The compressor 15 and the liquid reservoir 1 are located on different sides of the support component 30, thereby making full use of the space of the thermal management module 100 and facilitating the miniaturization design of the thermal management module 100.

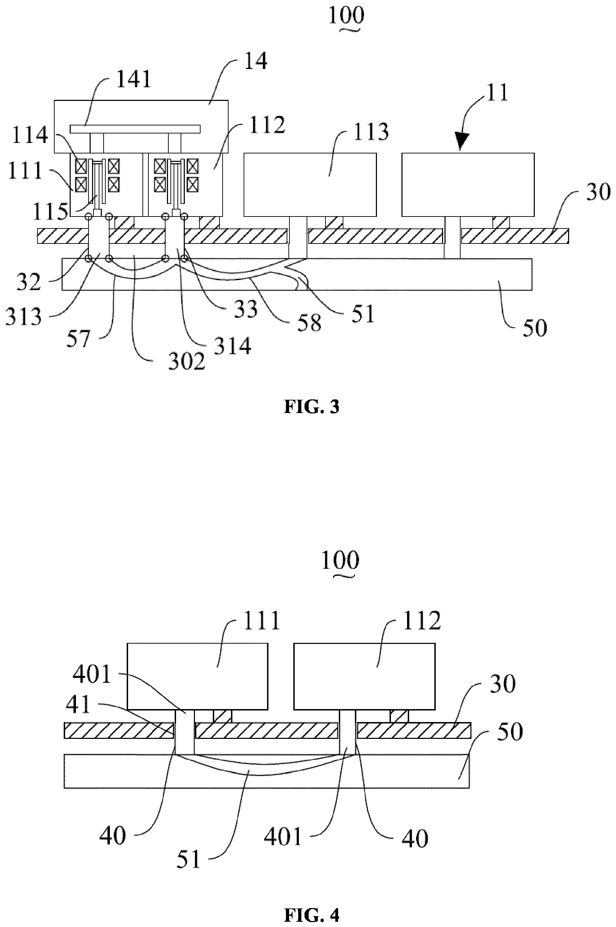

As shown in FIG. 3 and FIG. 24, a thermal management module 100 in accordance with another embodiment of present invention includes a thermal management component 10, a support component 30 and a connecting component 50. The support component 30 includes a first rib 32 and a second rib 33. A hollow space 302 is formed between the first rib 32 and the second rib 33. The first rib 32 defines a first transfer hole 313. The second rib 33 defines a second transfer hole 314.

The thermal management component 10 includes a first sub-component 111 and a second sub-component 112. The first transfer hole 313 communicates with the first sub-component 111 and the connecting component 50. The second transfer hole 314 communicates with the second sub-component 112 and the connecting component 50. In this embodiment, both the first sub-component 111 and the second sub-component 112 are valve components, such as electronic expansion valves, solenoid valves, one-way valves, or three-way electric valves. The valve component performs a communication and closing function or a throttling function. That is, the communication function between the valve components can be realized through the support component 30 and the connecting component 50.

In the embodiment of the present invention, the thermal management module 100 includes the support component 30 and the connecting component 50. That is, the flow channel plate is divided into the support component 30 with a main support function and the connecting component 50 with a main communication function, thereby achieving at least partial separation of the support function and the communication function. As a result, both the support component 30 and the connecting component 50 can be manufactured with a relatively simple process to reduce the cost. The support component 30 includes the first rib 32 and the second rib 33. The hollow space 302 is formed between the first rib 32 and the second rib 33. The hollow space 302 is conducive to lightweight design.

The support component 30 has a plurality of hollow spaces 302 spaced apart from one another. A cross-sectional area of the hollow spaces 302 is larger than a cross-sectional areas of the transfer holes 313 and 314, thereby further reducing the weight of the support component 30.

The connecting component 50 includes a first connecting pipe 57 and a second connecting pipe 58. Both the first connecting pipe 57 and the second connecting pipe 58 have channels 51. The first connecting pipe 57 communicates with the first sub-component 111 and the second sub-component 112. The second connecting pipe 58 communicates with the first sub-component 111 and other components. There is an air gap formed between the first connecting pipe 57 and the second connecting pipe 58.

The thermal management component 10 includes a third sub-component 113. The second connecting pipe 58 communicates with the first sub-component 111 and the third sub-component 113. The first sub-component 111 is at least one of a valve component and a sensor. The second sub-component 112 is at least one of a valve component and a heat exchanger 112c. The third sub-component 113 is at least one of a liquid reservoir, a gas-liquid separator 171 and a compressor 15.

As shown in FIG. 5, the thermal management module 100 includes the compressor 15 and the liquid reservoir 16. The compressor 15 and the reservoir 16 are disposed on different sides of the support component 30, thereby saving space of the thermal management module 100.

As shown in FIG. 4, a thermal management module 100 includes a thermal management component 10, a support component 30 and a connecting component 50. The support component 30 supports the thermal management component 10. The thermal management component 10 includes a first sub-component 111 and a second sub-component 112. The thermal management module 100 includes a connection portion 40 connecting the first sub-component 111 and the connecting component 50. The connection portion 40 communicates with the first sub-component 111 and the connecting component 50. The first sub-component 111 and the second sub-component 112 are in communication at least through the connection portion 40 and the connecting component 50.

The connection portion 40 extends from one side to another side along the thickness direction of the support component 30. The connection portion 40 is part of the first sub-component 111, or the connection portion 40 is part of the connecting component 50.

In the embodiment of the present invention, the thermal management module 100 includes the support component 30 and the connecting component 50. That is, the flow channel plate is divided into the support component 30 with a main support function and the connecting component 50 with a main communication function, thereby achieving at least partial separation of the support function and the communication function. As a result, both the support component 30 and the connecting component 50 can be manufactured with a relatively simple process to reduce the cost. The connection portion 40 is part of the first sub-component 111, or the connection portion 40 is part of the connecting component 50. This reduces the need for the support component 30 to serve as a connection between the first sub-component 111 and the connecting component 50, thereby reducing the risk of fluid leakage within the thermal management module 100. The connection portion 40 and the first sub-component 111 are of one piece, or the connection portion 40 and the support component 30 are of one piece.

The connection portion 40 defines a communication hole 401. The connecting component 50 defines a channel 51. The communication hole 401 communicates with the channel 51. The channel 51 and the communication hole 401 communicate with the first sub-component 111 and the second sub-component 112. The first sub-component 111 and the second sub-component 112 may both be valve components or heat exchangers. The first sub-component 111 may be one of the heat exchanger and the valve component, and the second sub-component 112 may be a remaining one of the heat exchanger and the valve component.

The first sub-component 111 is a valve component. The first sub-component 111 is used to control the communication state of the fluid. The connection portion 40 belongs to a valve body portion of the first sub-component 111. The connection portion 40 extends through the support component 30 along the thickness direction of the support component 30. Alternatively, the connection portion 40 belongs to the connecting component 50. The connection portion 40 is a connection pipe that extends through the support component 30 along the thickness direction of the support component 30. The support component 30 defines a through hole 41. The connection portion 40 passes through the through hole 41. There may be a gap between the connection portion 40 and a hole wall corresponding to the through hole 41, thereby reducing heat crosstalk between them.

The thermal management module includes the connection portion 40 connected between the second sub-component 112 and the connecting component 50. The connection portion 40 communicates with the second sub-component 112 and the connecting component 50. The second sub-component 112 is a heat exchanger. The second sub-component 112 is used for heat exchange between the fluids. The connection portion 40 is part of the second sub-component 112, and the connection portion 40 extends through the support component 30 along the thickness direction of the support component 30. Alternatively, the connection portion 40 belongs to the connecting component 50, and the connection portion 40 is a connection pipe that extends through the support component 30 along the thickness direction of the support component 30.

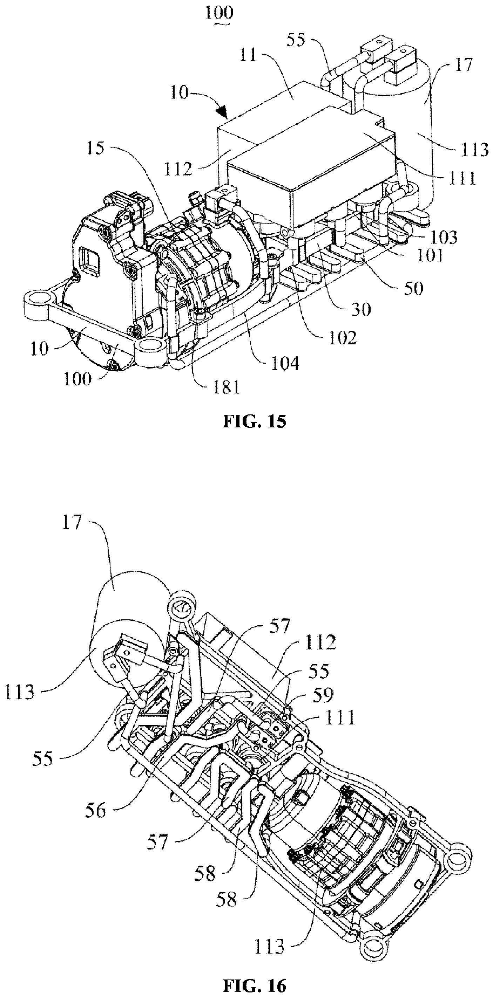

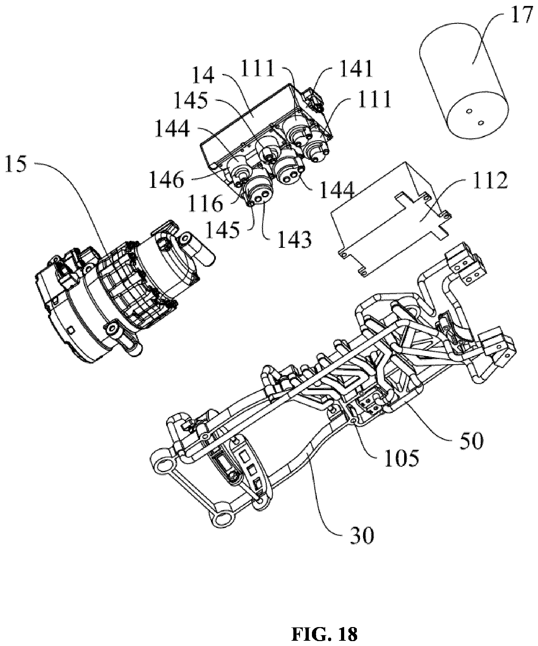

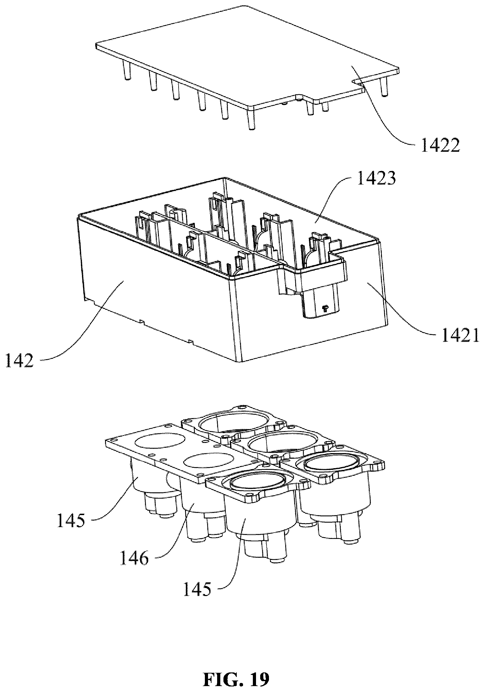

As shown in FIGS. 15 to 24, a thermal management module 100 in accordance with an embodiment of the present invention includes a thermal management component 10, a support component 30 and a connecting component 50.

The support component 30 includes a first surface 101 and a second surface 102 which are located in a thickness direction thereof. The thermal management component 10 is located at least partially on a side of the first surface 101. The connecting component 50 is located at least partially on a side of the second surface 102. The thermal management component 10 is connected to the side of the first surface 101. The connecting component 50 is connected to the side of the second surface 102. The support component 30 includes a first side 103 and a second side 104 in the thickness direction thereof. The thermal management component 10 is connected to the first side 103. The connecting component 50 is connected to the second side 104.

The support component 30 defines a transfer hole 310. The transfer hole 310 communicates with the thermal management component 10 and the connecting component 50. The connecting component 50 has a channel 51 inside it. The channel 51 is in communication with the transfer hole 310. Thermal management component 10 includes at least two sub-components 11. The thermal management module 100 has a flow channel 105 communicating with the at least two sub-components 11. The transfer hole 310 and the channel 51 are at least part of the flow channel 105.

In the embodiment of the present invention, the thermal management module 100 includes the support component 30 and the connecting component 50. The connecting component 50 defines the channel 51 inside it. The channel 51 is in communication with the transfer hole 310. The transfer hole 310 and the channel 51 are at least part of the flow channel 105. That is, the die-cast flow channel plate is divided into the support component 30 with a main support function and the connecting component 50 with a main communication function, thereby achieving at least partial separation of the support function and the communication function. Therefore, both the support component 30 and the connecting component 50 can be manufactured with a relatively simple process to reduce costs. Furthermore, compared with the heavy flow channel plate formed by die-casting, the weight of the thermal management module 100 disclosed in the present invention can also be reduced.

As shown in FIG. 24, the support component 30 includes a first rib 32 and a second rib 33. A hollow space 302 is formed between the first rib 32 and the second rib 33. The first rib 32 defines a first transfer hole 313. The second rib 33 defines a second transfer hole 314. The support component 30 includes the first rib 32 and the second rib 33. The hollow space 302 is formed between the first rib 32 and the second rib 33. The hollow space 302 is conducive to lightweight design.

The support component 30 defines a transfer hole portion 31. The transfer hole portion 31 communicates with the thermal management component 10 and the connecting component 50. The transfer hole portion 31 includes a first hole portion 311 and a second hole portion 312. The support component 30 includes a hollow portion 301 between the first hole portion 311 and the second hole portion 312. The first hole portion 311 defines a first transfer hole 313. The second hole portion 312 defines a second transfer hole 314. The support component 30 includes the hollow portion 301 between the first hole portion 311 and the second hole portion 312. The hollow portion 301 is beneficial to lightweight design.

As shown in FIGS. 1 to 3, the circled portions at two ends of the transfer hole 31 of the support component 30 are connected by welding so as to ensure sealing performance. The portions not drawn with circles are flexibly connected through pressure plates and pipelines to facilitate the maintenance and replacement of corresponding sub-components.

As shown in FIG. 2, FIG. 17 and FIG. 24, the thermal management component 10 includes the first sub-component 111 and the second sub-component 112. The first transfer hole 313 communicates with the first sub-component 111 and the connecting component 50. The second transfer hole 314 communicates with the second sub-component 112 and the connecting component 50. Such thermal management component 10 is suitable for low-pressure refrigerants such as R134a and R1234yf, and enhances the support of the second sub-component 112 by the support component 30.

As shown in FIGS. 3, 4, 16 and 17, the second transfer hole 314 may not be provided in the support component 30, and may be connected to the second sub-component 112 through the connecting pipe 55 of the connecting component 50 passing through the support component 30. Alternatively, the connecting pipe 55 is directly connected to the second sub-component 112 through the pressure plate 59 without contacting the support component 30. Such thermal management component 10 is suitable for high-pressure refrigerants such as R744 or CO2, reducing sealing points and reducing the possibility of high-pressure refrigerant leakage.

The support component 30 is an aluminum profile extruded part. The connecting component 50 is an aluminum profile stamped part, or the connecting component 50 is an aluminum pipe. Compared to the die-cast flow channel plate, by having the support component 30 extruded from the aluminum profile and the connecting component 50 stamped from the aluminum profile, or by configuring the connecting component 50 as the aluminum pipe, the embodiment of the present invention has a simple manufacturing process, low cost, and light weight. Compared to two stamped aluminum plates, due to the arrangement of the support component 30, the support strength is improved, which reduces the hidden danger of insufficient strength of the two stamped aluminum plates used to support the thermal management component 10.

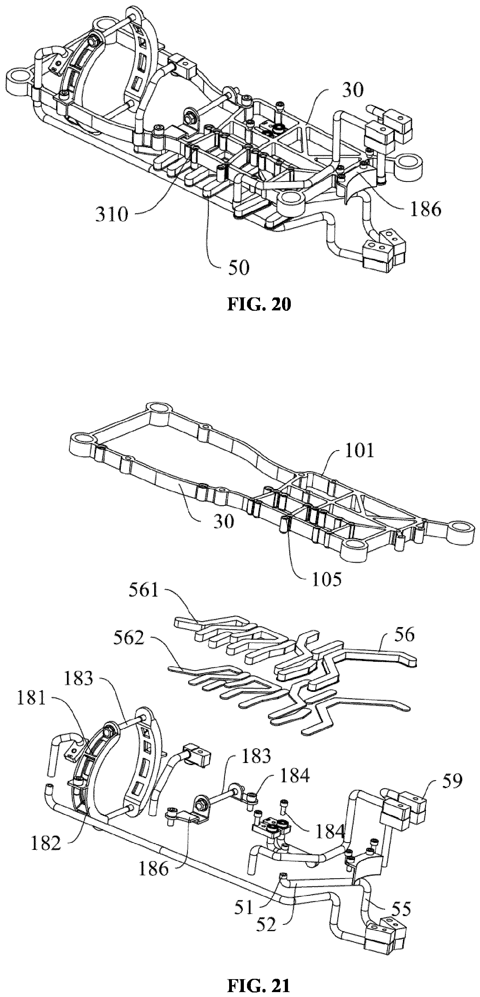

As shown in FIGS. 15 and 21, the connecting component 50 includes a channel wall 52. The channel wall 52 is disposed circumferentially around the channel 51. The channel 51 of the connecting component 50 is mainly responsible for the connecting function. Therefore, the channel wall 52 of the connecting component 50 does not need to be very thick, resulting in a simple structure, low cost, and light weight. In some embodiments, both the support component 30 and the connecting component 50 are made of aluminum.

As shown in FIGS. 8 to 10, in one embodiment of the connecting component 50, the connecting component 50 includes a first plate 53 and a second plate 54. The first plate 53 defines a first groove 531. The second plate 54 defines a second groove 541. The first plate 53 and the second plate 54 are welded together. The first groove 531 and the second groove 541 cooperate to form at least part of the channel 51. Since the connecting component 50 is mainly responsible for the communication function and the supporting function lies in the support component 30, both the first plate 53 and the second plate 54 of the connecting component 50 can be formed by stamping. As a result, not only is the manufacturing process simpler, but the stamping thickness and weight are lighter.

As shown in FIG. 11, in another embodiment of the connecting component 50, the connecting component 50 includes a first plate 53 and a second plate 54. The first plate 53 defines a first groove 531. The second plate 54 is of a flat configuration. The first plate 53 and the second plate 54 are welded together. The first groove 531 of the first plate 53 and the second plate 54 cooperate to form at least part of the channel 51. Since the connecting component 50 is mainly responsible for the connecting function, and the supporting function lies in the support component 30, the first plate 53 and the first plate 53 of the connecting component 50 can be formed by stamping. As a result, not only the manufacturing process is simpler, but also the thickness and weight of the stamping are lighter. The second plate 54 can be formed by hot rolling, so that the manufacturing process is simple, the cost is low, and the weight is light.

As shown in FIG. 12, in yet another embodiment of the connecting component 50, the connecting component 50 includes a connecting pipe 55. A conduit 551 of the connecting pipe 55 forms at least part of the channel 51. The connecting pipe 55 can be formed by drilling and bending processes. Compared with the die-cast flow channel plate, the process is simple, the cost is low, and the weight is lighter. In some embodiments, the connecting component 50 may also be a combination of a stamped plate and the connecting pipe 55.

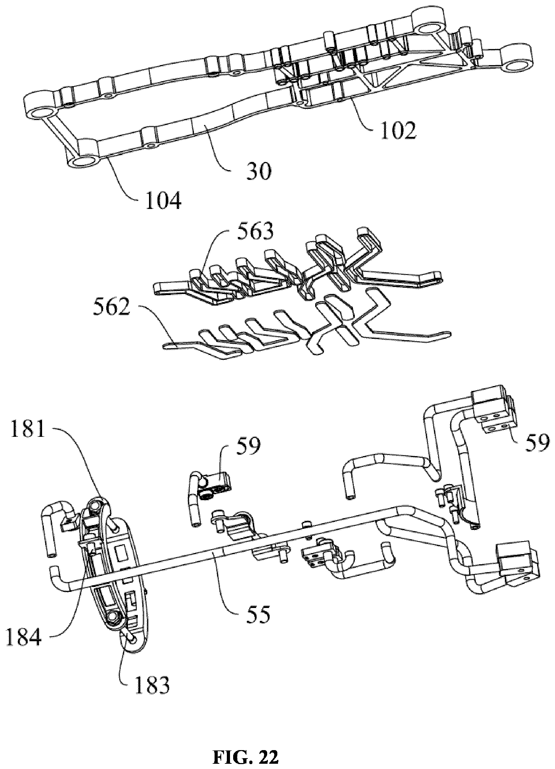

As shown in FIGS. 21 and 22, the connecting component 50 includes a plurality of mutually isolated plate blocks 56. Each plate block 56 includes a first plate 561 and a second plate 562. The first plate 561 defines a first groove 563. The second plate 562 has a flat plate shape, or the second plate 562 defines a second groove. The first plate 561 and the second plate 562 are spliced to form at least part of the channel 51. Since the plurality of plate blocks 56 are isolated from one another, the thermal bridge effect among the plate blocks 56 can be reduced, thereby improving the thermal management performance of the thermal management module 100. Besides, the connecting component 50 may also be formed by stacking composite plates.

As shown in the illustrated embodiment of FIGS. 15 to 24, the connecting component 50 includes and is combined with the connecting pipe 55 and the plate block 56.

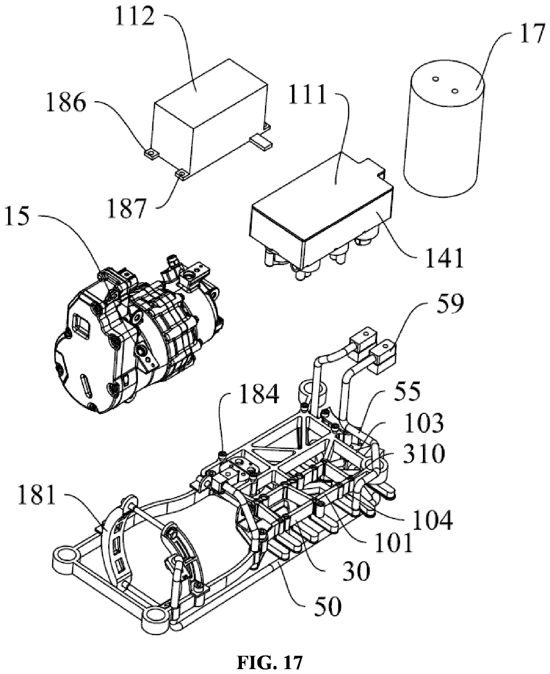

As shown in FIGS. 17 and 25, the thermal management component 10 includes valve components 111a-111f and a heat exchanger 112c. The valve component is used to control the communication state of the fluid. The heat exchanger 112c is used for heat exchange between at least two fluids. The support component 30 and the connecting component 50 cooperate to communicate with the valve component and the heat exchanger, so that the structures of the support component 30 and the connecting component 50 are relatively simple.

As shown in FIGS. 2, 18 and 19, the thermal management component 10 includes a valve assembly 14. The valve assembly 14 includes at least two valve components 11 1a-111f and a control portion 141. Each valve component 111a-111f includes a motor portion 114 and a valve core portion 115. At least two valve components 111a-111f share the control portion 141. The support component 30 and the connecting component 50 cooperate to communicate with the at least two valve components 111a-111f. The valve assembly 14 integrates the control portion 141 of the two valve components 111a-111f, thereby reducing the connection wiring harnesses and connectors between the valve components 111 and a vehicle controller, thereby reducing costs. The reduction in wiring harness makes installation and error proofing easier. Besides, the cost of additional power modules and driver modules is reduced. The valve assembly 14 integrates the control portion 141 of the two valve components 111, which improves communication efficiency with the vehicle controller, facilitates software upgrades of all valve components 111a-111f, and minimizes the accumulation of inrush current.

The thermal management component 10 further includes at least one sub-component 11 of a sensor, a gas-liquid separation device, a liquid reservoir and a compressor. This sub-component 11 communicates with other sub-components 11 through the connecting component 50, or this sub-component 11 communicates with other sub-components 11 through the connecting component 50 and the support component 30.

As shown in FIGS. 15, 16 and 25, the thermal management module 100 includes a compressor 15 and a gas-liquid separation device 17. The gas-liquid separation device 17 includes a gas-liquid separator 171 and an intermediate heat exchanger 172. The intermediate heat exchanger 172 is disposed inside the gas-liquid separation device 17. The intermediate heat exchanger 172 includes a first heat exchange portion 173 and a second heat exchange portion 174 capable of exchanging heat with each other. The first heat exchange portion 173 and the second heat exchange portion 174 are used to circulate high-temperature refrigerant and low-temperature refrigerant, respectively. The first heat exchange portion 173 is connected to an outlet of the compressor 15. The second heat exchange portion 174 is connected to an inlet of the compressor 15. In this way, the intake air temperature of the compressor 15 can be increased and the inlet temperature before entering the throttle valves 111f, 112a, 112b can be reduced, thereby improving the energy efficiency of the thermal management system.

The support component 30 is a bracket which is a profile extrusion molded part. Compared with the die-casting flow channel plate, the cost is lower. Compared with the stamped plate, the support performance is better. The compressor 15 is located at least partially inside the support component 30. The gas-liquid separation device 17 is located on a periphery of the support component 30, thereby improving the space utilization of the thermal management module 100.

The connecting component 50 includes a connecting pipe 55. The connecting pipe 55 communicates with the gas-liquid separation device 17 and the transfer hole 310 of the support component 30. The connecting pipe 55 communicates with the compressor 15 and the transfer hole 310 of the support component 30. The compressor 15 is in communication with the gas-liquid separation device 17.

In some embodiments, the at least two sub-components 11 include a heat exchanger 112c and a valve component 111. As shown in FIG. 2, FIG. 18 and FIG. 24, the heat exchanger 112c defines a first flow channel 131 and a second flow channel 132. The first flow channel 131 is configured to circulate a refrigerant. The second flow channel 132 is configured to communicate with a coolant. The valve component 111 includes a motor portion 114, a valve core portion 115, and a valve flow path portion 116. The valve core portion 115 is used to control the communication state of the valve flow path portion 116. The transfer hole portion 31 includes a first hole portion 311 and a second hole portion 312. The connecting component 50 includes a first channel portion 511 and a second channel portion 512. The first hole portion 311 communicates with the valve flow path portion 116 and the first channel portion 511. The second hole portion 312 communicates with the first flow channel 131 and the second channel portion 512. The first channel portion 511 and the second channel portion 512 are in communication.

In other embodiments, as shown in FIGS. 2, 18, 19 and 25, the at least two sub-components 11 include a valve assembly 14. The valve assembly 14 includes a first valve component 143, a second valve component 144 and a control board 147. Each valve component 111 includes a motor portion 114 and a valve core portion 115. The at least two valve components 111 share the control board 147. The support component 30 and the connecting component 50 cooperate to communicate with the at least two valve components 111. The first valve component 143 is a three-way valve or a throttle valve. The second valve component 144 is a three-way valve or a throttle valve.

The valve assembly 14 includes a control box 142 in which the control board 147 is located. The first valve component 143 includes a first valve body portion 145. The second valve component 144 includes a second valve body portion 146. The first valve body portion 145 and the second valve body portion 146 are spaced apart from each other, or the first valve body portion 145 and the second valve body portion 146 are connected to each other. The control box 142 includes a first box body 1421 and a second box body 1422. The second box body 1422 covers the first box body 1421 and forms a cavity 1423 with the first box body 1421. The control board 147 is disposed in the cavity 1423. The first box body 1421 and the second box body 1422 are assembled and fixed. The second box body 1422 is detachably connected to the first box body 1421 to facilitate the removal of the valve core portion 115 and the control board 147 for maintenance.

The thermal management module 100 includes a compressor 15 and a gas-liquid separation device 17. The compressor 15 is at least partially located inside the support component 30. The gas-liquid separation device 17 is at least partially located outside the support component 30. This arrangement makes full use of the space of the thermal management module 100, thereby facilitating the miniaturization design of the thermal management module 100.

As shown in FIG. 3, FIG. 16 and FIG. 25, the connecting component 50 includes a first connecting pipe 57 and a second connecting pipe 58. Both the first connecting pipe 57 and the second connecting pipe 58 define channels 51. The first connecting pipe 57 communicates with the first sub-component 111 and the second sub-component 112. The second connecting pipe 58 communicates the first sub-component 111 and other components. An air gap is formed between the first connecting pipe 57 and the second connecting pipe 58, thereby reducing the potential thermal crosstalk between the first connecting pipe 57 and the second connecting pipe 58, and improving the thermal management performance of the thermal management module 100. The first sub-component 111 and the second sub-component 112 may be two valve components respectively, or may be a valve component and a heat exchanger, respectively.

The thermal management component 10 includes a third sub-component 113. The second connecting pipe 58 communicates with the first sub-component 111 and the third sub-component 113. The first sub-component 111 is at least one of a valve component and a sensor. The second sub-component 112 is at least one of a valve component and a sensor. The third sub-component 113 is at least one of a liquid reservoir, a gas-liquid separator, a gas-liquid separation device with an intermediate heat exchanger, and a compressor 15.

As shown in FIGS. 15 and 25, the thermal management module 100 includes the compressor 15 and the gas-liquid separation device 17. The gas-liquid separation device 17 includes a gas-liquid separator 171 and an intermediate heat exchanger 172. The intermediate heat exchanger 172 is disposed inside the gas-liquid separator 171. The compressor 15 is at least partially located inside the support component 30. The gas-liquid separation device 17 is at least partially located outside the support component 30. This arrangement makes full use of the space of the thermal management module 100, thereby facilitating the miniaturization design of the thermal management module 100.

As shown in FIGS. 17 and 21, the thermal management module 100 further includes a fixing bracket 181. The fixing bracket 181 is used to improve the stability of the connection of the compressor 15 to the support component 30. The fixing bracket 181 includes a bracket body 182 extending circumferentially around the compressor 15 and a fastener 183 fastening the bracket body 182 and the compressor 15. The fastener 183 may be a bolt, a screw or other structures.

The support component 30 defines a plurality of screw holes 185. Thermal management module 100 further includes a plurality of bolts 184. The bolts 184 and the screw holes 185 cooperate to fixedly connect the heat exchanger 112c, the gas-liquid separation device 17, the compressor 15 and other devices to the support component 30. Each of the heat exchanger 112c, the gas-liquid separation device 17 and the compressor 15 includes a connecting plate 186. The connecting plate 186 is provided with a through hole 187. The bolt 184 passes through the through hole 187 and is tightly fitted to the screw hole 185.

As shown in FIG. 25, it is a schematic diagram of a thermal management system 200 in accordance with an embodiment of the present invention. Thermal management system 200 includes the thermal management module 100.

The thermal management system 200 includes a compressor 15, a first three-way valve 111a, a second three-way valve 111b, a first throttle valve 111c, a second throttle valve 111d, a third throttle valve 111e, a fourth throttle valve 111f, a fifth throttle valve 112a, a sixth throttle valve 112b, an indoor condenser 21, an outdoor condenser 22, a first indoor evaporator 23, a second indoor evaporator 24, a battery cooling heat exchanger 112c, a gas-liquid separation device 17, two temperature and pressure sensors PT1, PT2, and five temperature sensors T1, T2, T3, T4, and T5. In the embodiments of FIGS. 1 to 22, the thermal management module 100 in the dotted box is integrated. That is, the thermal management module 100 includes the compressor 15, the battery cooling heat exchanger 112c, the gas-liquid separation device 17, two three-way valves 111a, 111b, four throttle valves 111c, 111d, 111e, 111f, two temperature and pressure sensors PT1, PT2, five temperature sensors T1-T5, one flow channel plate and one control portion 141.

Among them, the first throttle valve 111c, the second throttle valve 111d, the third throttle valve 111e, the third throttle valve 111e and the fourth throttle valve 111f are all-pass two-way throttle valves. That is, each throttle valve has the functions of two-way full pass, two-way full close and throttling in both opposite directions of the refrigerant, thereby enriching the operation mode of the system. The first throttle valve 111c, the second throttle valve 111d, the third throttle valve 111e, the third throttle valve 111e and the fourth throttle valve 111f may be electronic expansion valves.

Thermal management system 200 has a cooling mode. In the cooling mode, the compressor 15 compresses the high-temperature and high-pressure refrigerant to the first port 1 of the first three-way valve 111a. The refrigerant coming out of the second port 2 of the first three-way valve 111a enters the outdoor condenser 22 and releases heat to the outside of the front-end module. The refrigerant then passes through the first heat exchange portion 173 of the intermediate heat exchanger 172, and then flows to the fifth throttle valve 112a and the sixth throttle valve 112b for being throttled to become a low-temperature and low-pressure refrigerant. The low-temperature and low-pressure refrigerant cools the air in the air conditioning box through the first indoor evaporator 23 and the second indoor evaporator 24, thereby cooling the passenger compartment in the vehicle. The refrigerant after passing through the first indoor evaporator 23 and the second indoor evaporator 24 enters the third port 3 of the second three-way valve 111b. After the refrigerant comes out of the first port 1 of the second three-way valve 11 1b, it enters the gas-liquid separator 171 of the gas-liquid separation device 17. The refrigerant passes through the second heat exchange portion 174 of the intermediate heat exchanger 172. After the low-temperature refrigerant in the second heat exchange portion 174 absorbs the high-temperature refrigerant in the first heat exchange portion 173, it returns to the inlet of the compressor 15. Thus, a circular loop is formed.

When a battery needs to be cooled, the refrigerant flowing out from the first heat exchange portion passes through the fourth throttle valve 111f and then enters the first flow channel 131 of the battery cooling heat exchanger 112c. The low-temperature refrigerant in the first flow channel 131 cools the coolant in the second flow channel 132. The cooled coolant can dissipate heat through the water-cooling plate to the car's power battery, motor, electronic control and other devices that need heat dissipation.

The thermal management system 200 has a heating mode. In the heating mode, the compressor 15 compresses the high-temperature and high-pressure refrigerant to the first port 1 of the first three-way valve 1 1 1a. The refrigerant coming out of the third port 3 of the first three-way valve 111a enters the indoor condenser 21 and releases heat to the air in the front air-conditioning box, thereby heating the passenger compartment. Then, the refrigerant is throttled by the first throttle valve 111c and then enters the outdoor condenser 22 to absorb the heat in the outside air of the front-end module. The refrigerant then enters the first heat exchange portion 173 of the intermediate heat exchanger 172, and returns to the compressor 15 after passing through the fourth throttle valve 111f, the first flow channel 131 of the battery cooling heat exchanger 112c, the gas-liquid separator 171 and the second heat exchange portion 174. Thus, a refrigerant cycle is formed.

In another heating mode, the compressor 15 compresses the high-temperature and high-pressure refrigerant to the first port 1 of the first three-way valve 111a. The refrigerant coming out of the third port 3 of the first three-way valve 111a enters the indoor condenser 21 and releases heat to the air in the front air-conditioning box, thereby heating the passenger compartment. Then, the refrigerant is throttled by the first throttle valve 111c and then enters the outdoor condenser 22 to absorb the heat in the outside air of the front-end module. The refrigerant returns to the compressor 15 after passing through the third throttle valve 111e, the gas-liquid separator 171 and the second heat exchange portion 174. Thus, a refrigerant cycle is formed. In this heating mode, the refrigerant does not pass through the battery cooling heat exchanger 112c, and therefore does not exchange heat for the battery.

In the illustrated embodiment of FIGS. 15 to 24, the first three-way valve 111a, the second three-way valve 11 1b, the first throttle valve 1 1 1c, the second throttle valve 11 1d, the third throttle valve 111e, the third throttle valve 111e and the fourth throttle valve 111f are electronically controlled and integrated, that is, the valve assembly 14 is formed. Centralized control of the six valve components is achieved through the control board 147.

In some embodiments, the thermal management module 100 may further integrate the fifth throttle valve 112a and the sixth throttle valve 112b. The gas-liquid separation device 17 may also be only the gas-liquid separator 171 or the liquid reservoir. The temperature pressure sensors PT1, PT2 and temperature sensors T1, T2, T3, T4, T5 can also be optionally integrated into the thermal management module 100. The arrangement of the first three-way valve 111a and the second three-way valve 111b reduces the number of two-way stop valves, thereby reducing the cost.

The terminology used in the disclosure is for the purpose of describing particular embodiments only and is not intended to be limiting of the present invention. As used in the present invention and the appended claims, the singular forms "a", "the" and "said", if any, are intended to include the plural forms as well, unless the context clearly dictates otherwise.

It should be understood that "first", "second" and similar words used in the specification and claims of the present invention do not indicate any order, quantity or importance, but are only used to distinguish different components. Similarly, similar words such as "a" or "an" do not mean a quantity limit, but mean that there is at least one. "a plurality of' means a quantity of two or more. Unless otherwise indicated, similar words such as "front", "rear", "lower" and/or "upper" are only for convenience of description, and are not limited to one position or one spatial orientation. Terms such as "including" or "comprising" and other similar words mean that the elements or components before "including" or "comprising" now cover the elements or components listed after "including" or "comprising" and their equivalents, and do not exclude other elements or components.

The present invention is not limited to the specific embodiments described above. Various changes made by those of ordinary skill in the art based on the above concepts without creative efforts fall within the protection scope of the present invention.

## Claims

1. A thermal management module (100), **characterized by** comprising:
a thermal management component (10);
a support component (30); and
a connecting component (50);
wherein the support component (30) comprises a first surface (101) and a second surface (102) which are disposed in a thickness direction thereof; the thermal management component (10) is at least partially located on a side of the first surface (101); the connecting component (50) is at least partially located on a side of the second surface (102); the thermal management component (10) is connected to the side of the first surface (101), and the connecting component (50) is connected to the side of the second surface (102);
the support component (30) defines a transfer hole (310) that communicates with the thermal management component (10) and the connecting component (50); the connecting component (50) defines a channel (51) located inside the connecting component (50), and the channel (51) is in communication with the transfer hole (310);
the thermal management component (10) comprises at least two sub-components (11), the thermal management module (100) defines a flow channel (105) communicating with the at least two sub-components (11), and the transfer hole (310) and the channel (51) are at least part of the flow channel (105).

2. The thermal management module (100) according to claim 1, wherein the connecting component (50) comprises a channel wall (52) which is disposed circumferentially around the channel (51); an axial direction of the transfer hole (310) extends along the thickness direction of the support component (30).

3. The thermal management module (100) according to claim 1, wherein the connecting component (50) comprises a first plate (53) and a second plate (54), the first plate (53) defines a first groove (531), the second plate (54) defines a second groove (541), the first plate (53) and the second plate (54) are connected by welding, and the first groove (531) and the second groove (541) cooperate to form at least part of the channel (51).

4. The thermal management module (100) according to claim 1, wherein the connecting component (50) comprises a first plate (53) and a second plate (54), the first plate (53) defines a first groove (531), the second plate (54) is of a flat configuration, the first plate (53) and the second plate (54) are welded together; the first groove (531) of the first plate (53) and the second plate (54) cooperate to form at least part of the channel (51).

5. The thermal management module (100) according to claim 1, wherein the connecting component (50) comprises a connecting pipe (55), a conduit (551) of the connecting pipe (55) forms at least part of the channel (51).

6. The thermal management module (100) according to claim 1, wherein the at least two sub-components (11) comprise a first sub-component (111) and a second sub-component (112); the first sub-component (111) is a valve component (111a, 111b, 111c, 111d, 111e, 111f), the first sub-component (111) is configured to control a communication state of a fluid; the second sub-component (112) is a heat exchanger (112c), the second sub-component (112) is configured to exchange heat between at least two fluids;
the support component (30) and the connecting component (50) cooperate to communicate with the first sub-component (111) and the second sub-component (112);
all of the first sub-component (111) and the second sub-component (112) are located on a same one of the side of the first surface (101) and the side of the second surface (102); or, the first sub-component (111) is located on one of the side of the first surface (101) and the side of the second surface (102), and the second sub-component (112) is located on a remaining one of the side of the first surface (101) and the side of the second surface (102).

7. The thermal management module (100) according to claim 1, wherein the thermal management component (10) comprises a valve assembly (14), the valve assembly (14) comprises at least two valve components (143, 144) and a control portion (141), each valve component comprises a motor portion (114) and a valve core portion (115), the at least two valve components (143, 144) share the control portion (141), and the support component (30) and the connecting component (50) cooperate to be in communication with the at least two valve components (143, 144).

8. The thermal management module (100) according to claim 1, wherein the support component (30) is an aluminum profile extruded part; the connecting component (50) is an aluminum profile stamped part, or the connecting component (50) is an aluminum pipe.

9. The thermal management module (100) according to claim 1, wherein the thermal management component (10) further comprises at least one sub-component (11) of a sensor, a gas-liquid separation device (17), a liquid reservoir (16) and a compressor (15); and
the one sub-component is in communication with other sub-components through the connecting component (50), or the one sub-component is in communication with other sub-components through the connecting component (50) and the support component (30).

10. The thermal management module (100) according to claim 1, wherein the thermal management module (100) comprises a compressor (15) and a gas-liquid separation device (17), the gas-liquid separation device (17) comprises a gas-liquid separator (171) and an intermediate heat exchanger (172), the intermediate heat exchanger (172) is disposed inside the gas-liquid separation device (17);
the support component (30) is a bracket which is a profile extrusion molded part; the compressor (15) is at least partially disposed inside the support component (30); the gas-liquid separation device (17) is disposed on a periphery of the support component (30);
the connecting component (50) comprises a connecting pipe (55), the connecting pipe (55) communicates with the gas-liquid separation device (17) and the transfer hole (310) of the support component (30), the connecting pipe (55) communicates with the compressor (15) and the transfer hole (310) of the support component (30), and the compressor (15) is in communication with the gas-liquid separation device (17).

11. A thermal management module (100), **characterized by** comprising:
a thermal management component (10);
a support component (30), the support component (30) comprising a first rib (32) and a second rib (33), a hollow space (302) being formed between the first rib (32) and the second rib (33), the first rib (32) defining a first transfer hole (313), the second rib (33) defining a second transfer hole (314); and
a connecting component (50);
wherein the thermal management component (10) comprises a first sub-component (111) and a second sub-component (112), the first transfer hole (313) communicates with the first sub-component (111) and the connecting component (50), the second transfer hole (314) communicates with the second sub-component (112) and the connecting component (50).

12. The thermal management module (100) according to claim 11, wherein the connecting component (50) comprises a first connecting pipe (57) and a second connecting pipe (58), each of the first connecting pipe (57) and the second connecting pipe (58) defines a channel, the first connecting pipe (57) communicates with the first sub-component (111) and the second sub-component (112), the second connecting pipe (58) communicates with the first sub-component (111) and other components, an air gap is formed between the first connecting pipe (57) and the second connecting pipe (58).

13. The thermal management module (100) according to claim 12, wherein the thermal management component (10) comprises a third sub-component (113), the second connecting pipe (58) communicates with the first sub-component (111) and the third sub-component (113).

14. The thermal management module (100) according to claim 13, wherein the first sub-component (111) comprises at least one of a valve component (1 11a, 111b, 111c, 111d, 111e, 111f) and a sensor, the second sub-component (112) comprises at least one of a heat exchanger (112c) and a valve component, the third sub-component (113) is at least one of a liquid reservoir (16), a gas-liquid separator (171), a gas-liquid separation device (17) and a compressor (15).

15. The thermal management module (100) according to claim 11, wherein the thermal management module (100) comprises a compressor (15) and a gas-liquid separation device (17), the gas-liquid separation device (17) comprises a gas-liquid separator (171) and an intermediate heat exchanger (172), the intermediate heat exchanger (172) is disposed inside the gas-liquid separator (171), the compressor (15) is at least partially disposed inside the support component (30), the gas-liquid separation device (17) is at least partially disposed outside the support component (30);
the support component (30) defines a plurality of hollow spaces (302) spaced apart from one another; a cross-sectional area of the hollow spaces (302) is larger than a cross-sectional area of the first transfer hole (313) and the second transfer hole (314).
